# EUROPÄISCHE PATENTANMELDUNG

(11) **EP 2 489 489 A1**
(43) Veröffentlichungstag der Anmeldung: **22.08.2012**
(21) Anmeldenummer: 12151479.8
(22) Anmeldetag: 18.01.2012
(51) Int. Cl.: B29B 9/06, B29B 9/16

(54) **Vorrichtung zur Herstellung von Granulaten aus polymeren Werkstoffen**

(30) Priorität: 18.02.2011 DE 102011004429
(71) Anmelder: Coperion GmbH, 70469 Stuttgart (DE)
(72) Erfinder: Stark, Dr. Bernhard, 88273 Fronreute (DE); Ahlgrimm, Michael, 74354 Besigheim (DE); Nicklas, Markus, 69226 Nußloch (DE); Hustert, Olaf, 88250 Weingarten (DE); Dürr, Dipl.-Ing. Michael, 88364 Wolfegg (DE); Dehm, Günther, 88369 Bergatreute (DE)
(74) Vertreter: Rau, Schneck & Hübner

(57) **Zusammenfassung**

Eine Vorrichtung (1) zur Herstellung von Granulaten aus polymeren Werkstoffen hat eine wassergekühlte Granuliereinrichtung (6) zur Erzeugung eines Kunststoff-Granulats. Eine der Granuliereinrichtung (6) nachgeordnete Abführleitung (7) dient zum Abführen eines Ausgang-Gemischstromes, enthaltend das Kunststoff-Granulat und Kühlwasser. Ein der Abführleitung (7) nachgeordneter Granulat-Wärmetauscher (11) dient zum Temperieren eines Temperier-Gemischstroms, enthaltend das Kunststoff-Granulat und zumindest einen Teil des Kühlwassers. Der Granulat-Wärmetauscher (11) hat einen Einlass (16) und einen Auslass (19) für ein Übertragungs-Wärmetauschermedium. Eine dem Granulat-Wärmetauscher (11) nachgeordnete Trocknungseinrichtung (31) dient zum Trocknen des Kunststoff-Granulats. Der Granulat-Wärmetauscher (11) hat eine Mehrzahl von parallel, also nicht in Reihe, verlaufenden Fluidpassagen (14) für den Temperier-Gemischstrom. Bei einem weiteren Aspekt hat die Herstell-Vorrichtung (1) mit der Granuliereinrichtung (6) und der Abführleitung (7) eine Letzterer nachgeordnete Energie-Rückgewinnungseinrichtung (18) zur Rückgewinnung von Energie aus einem Rückgewinnungs-Kühlwasserstrom, enthaltend zumindest einen Teil des Kühlwassers des Ausgangs-Gemischstroms. Die Energie-Rückgewinnungseinrichtung (18) hat mindestens einen ORC-Kreislauf (17) für ein ORC-Kreislaufmedium. Der ORC-Kreislauf (17) hat eine ORC-Turbine (22), einen ORC-Verdampfer (11, 21) und einen ORC-Kondensator (24). Es resultiert eine Herstellungs-Vorrichtung (1), bei der Abwärme, die in der Granuliereinrichtung auf das Kühlwasser übertragen wird, zur Erhöhung der Leistungsfähigkeit der Vorrichtung bzw. zur Verbesserung von deren Energieeffizienz genutzt ist.

## Beschreibung

Die Erfindung betrifft eine Vorrichtung zur Herstellung von Granulaten aus polymeren Werkstoffen.

Eine derartige Vorrichtung ist bekannt aus der EP 1 522 395 A2, der DE 43 37 205 A1, der DE 198 24 788 A1 und der DE 10 2008 023 046 A.

Es ist eine Aufgabe der vorliegenden Erfindung, Abwärme, die in der Granuliereinrichtung auf das Kühlwasser übertragen wird, zur Erhöhung der Leistungsfähigkeit der Vorrichtung bzw. zur Verbesserung von deren Energieeffizienz zu nutzen.

Diese Aufgabe ist erfindungsgemäß gelöst nach einem ersten Aspekt durch die im Anspruch 1 angegebenen Merkmale und nach einem zweiten Aspekt durch die im Anspruch 9 angegebenen Merkmale.

Erfindungsgemäß wurde erkannt, dass ein Wärmetauscher zum Temperieren eines Kunststoff-Granulat/Kühlwasser-Gemischstroms zur Verbesserung der Qualität des Granulat-Herstellungsprozesses genutzt werden kann. Der Granulat-Wärmetauscher kann den Temperier-Gemischtstrom kühlen oder heizen. Die Vorrichtung kann so ausgelegt werden, dass der Granulat-Wärmetauscher gesteuert wahlweise kühlen oder heizen kann.

Eine Kühlung mit dem Granulat-Wärmetauscher kann beispielsweise die Bildung von Vakuolen vermeiden, da das Kühlwasser mit einer höheren Temperatur durch die Granuliereinrichtung geführt werden kann. Dies kann zu einer flexibleren Beeinflussung einer Abkühlgeschwindigkeit und damit eines Schrumpfungsverhaltens der Granulate beitragen. Es kann eine Ausbildung von kristallinen und amorphen Strukturen im hergestellten Kunststoff-Granulat durch Vorgabe einer Abkühlgeschwindigkeit entweder gezielt forciert oder aber, falls eine solche Strukturausbildung unerwünscht ist, vermieden werden. Durch eine Kühlung mit dem Granulat-Wärmetauscher kann ein weiches Kunststoffprodukt abgekühlt werden, um dessen pneumatisches Förderverhalten bei einer im Granulat-Förderweg nach der Vorrichtung eingesetzten pneumatischen Förderung im Hinblick auf einen Druckverlust und im Hinblick auf einen Granulatabrieb zu verbessern. Die beim kühlenden Granulat-Wärmetauscher erfolgende Erwärmung des Übertragungs-Wärmeträger-Mediums kann zum Vorwärmen eines Kunststoffpulvers oder eines Kunststoff-Granulats genutzt werden, welche einen Extruder der Granuliereinrichtung als Ausgangsprodukte zugeführt werden. Die beim kühlenden Granulat-Wärmetauscher übertragene Wärme auf das Übertragungs-Wärmeträgermedium kann mit Hilfe einer Absorptionskältemaschine zur Erzeugung von Kaltwasser genutzt werden.

Soweit der Granulat-Wärmetauscher zum Heizen des Temperier-Gemischstrom genutzt wird, kann dies zum Entgasen oder Desodorieren von Kohlenwasserstoffen und Restmonomeren oder von sonstigen flüchtigen Stoffen genutzt werden. Die Erwärmung des Kunststoff-Granulats kann zur Verbesserung bzw. Beschleunigung einer Entgasung beispielsweise von Polyolefinen wie z. B. PP, HDPE (High Density Polyethylen), LLDPE (Linear Low Density Polyethylen), LDPE (Low Density Polyethylen), LDPE mit Vinylacetat-Anteil oder auch anderen Comonomeren genutzt werden. Das Heizen des Temperier-Gemischstroms mit dem Granulat-Wärmetauscher kann auch zum Kristallisieren von PET, insbesondere in Form von Chips, genutzt werden. Das Kühlen des Kunststoff-Granulats mit dem Granulat-Wärmetauscher kann zum Heizen einer nachgeordneten hydraulischen Förderung des Kunststoff-Granulats genutzt werden. Hierbei wird das Hydraulik-Medium der hydraulischen Förderung mit der Abwärme des Temperier-Gemischstroms im Granulat-Wärmetauscher geheizt. Hierdurch können Wärmeverluste der hydraulischen Förderung kompensiert werden.

Der Granulat-Wärmetauscher kann als Rohrbündel-Wärmetauscher ausgeführt sein. Die Rohre des Rohrbündels können gerade oder auch U-förmig verlaufen. Die Rohre können einen 5 bis 15 mal so großen, typischen Innendurchmesser haben wie der typische Durchmesser der hergestellten Granulatkörner beträgt. Auch Rohre mit einem unrunden Querschnitt können als Wärmetauscherrohre zum Einsatz kommen. Die Rohre können zum Beispiel einen rechteckigen Querschnitt haben. Der Granulat-Wärmetauscher kann auch als Platten-Wärmetauscher ausgeführt sein. Ein Beispiel für einen solchen Platten-Wärmetauscher gibt die EP 0 444 338 B1. Bei der Ausführung als Platten-Wärmetauscher kann das Übertragungs-Wärmetauschermedium in den Platten des Platten-Wärmetauschers strömen und zwischen den Platten des Platten-Wärmetauschers kann der Temperier-Gemischstrom strömen.

Eine Bypass-Leitung nach Anspruch 2 gewährleistet einen sicheren Betrieb der Vorrichtung. Eine Mengensteuereinheit kann zur Vorgabe einer Fluidmengenverteilung zwischen dem Granulat-Wärmetauscher und der Bypass-Leitung vorgesehen sein. Die Mengensteuereinheit kann durch eine Weiche, kann durch ansteuerbare Ventile einerseits nach einem Abzweig der Bypassleitung und vor dem Granulat-Wärmtauscher und andererseits in der Bypass-Leitung oder kann auch durch mindestes ein Quetschventil an einer der beiden vorgenannten Ventilpositionen realisiert sein.

Eine Förderrichtung entgegen einer Schwerkraftwirkung nach Anspruch 3 ist besonders bei Granulaten geeignet, deren spezifisches Gewicht geringer ist als das des Kühlwassers.

Eine Förderrichtung in Schwerkraftrichtung nach Anspruch 4 ist besonders bei Granulaten geeignet, deren spezifisches Gewicht höher ist als das des Kühlwassers. Die Förderrichtung in Schwerkraftrichtung ermöglicht einen Gegenstrom des Übertragungs-Wärmeträgermediums des Granulat-Wärmetauschers entgegen einer Schwerkraftrichtung, so dass das Übertragungs-Wärmeträgermedium innerhalb des Granulat-Wärmetauschers verdampft werden kann. Diese Verdampfungsmöglichkeit kann für bestimmte Anwendungen des Granulat-Wärmetauschers vorteilhaft sein.

Eine Konzentriereinrichtung nach Anspruch 5 steigert die Effizienz eines Wärmeübertrags zwischen dem Kunststoff-Granulat und dem Übertragungs-Wärmeträgermedium im Granulat-Wärmetrauscher. Ein Temperatureinfluss auf das Kunststoff-Granulat kann somit, eine gegebene Bauform des Granulat-Wärmetauschers vorausgesetzt, erhöht werden.

Eine Integration der Konzentriereinrichtung nach Anspruch 6 ist kompakt und führt zu geringen Wärmeverlusten. Die Konzentriereinrichtung kann im Bereich eines Erweiterungsabschnitts einer Behälterwand des Granulat-Wärmetauschers angeordnet sein. Eine Ringleitung am Eingang des Granulat-Wärmetauschers kann ein Bestandteil der Konzentriereinrichtung sein. Die Ringleitung kann vom Inneren des Erweiterungsabschnitts über ein Rückhaltesieb getrennt sein.

Ein Kühlwasser-Wärmetauscher nach Anspruch 7 kann zum Temperieren des Kühlwassers genutzt werden. Falls erforderlich, kann das Kühlwasser mit dem Kühlwasser-Wärmetauscher gekühlt werden. Die Energie, die von einem Übertragungs-Wärmetauschermedium des Kühlwasser-Wärmetauschers aufgenommen wird, kann rückgewonnen werden.

Eine Verbindung des Granulat-Wärmetauschers nach Anspruch 8 mit einer Abscheiderleitung nach der Trocknungseinrichtung der Vorrichtung kann genutzt werden, um den Temperier-Gemischstrom im Granulat-Wärmetauscher zu erhitzen. In diesem Fall dient das Kühlwasser selbst als das Übertragungs-Wärmetauschermedium des Granulat-Wärmetauschers. Eine solche Anordnung ist besonders bei der Nutzung des Granulat-Wärmetauschers zum Entgasen oder Desodorieren des Kunststoff-Granulats von Vorteil.

Gemäß dem zweiten Aspekt der Erfindung wurde erkannt, dass ein ORC-Kreislauf (Organic Rankine Cycle) eine besonders vorteilhafte Variante zur Nutzung der im Rückgewinnungs-Kühlwasserstrom enthaltenen Wärme darstellt. Beim Rückgewinnungs-Kühlwasserstrom kann es sich um den vorstehend bereits erwähnten Temperier-Gemischstrom, enthaltend das Kunststoffgranulat und zumindest einen Teil des Kühlwassers, handeln und/oder um einen Kühlwasserstrom nach einem Abscheiden von Kühlwasser vom Ausgangs-Gemischstrom und/oder um den Ausgangs-Gemischstrom selbst handeln. Die Energie-Rückgewinnungseinrichtung senkt den Energieverbrauch der Gesamtanlage. Im ORC-Kreislauf kann eine Pumpe angeordnet sein. Diese Pumpe kann zur Verdichtung des organischen Mediums genutzt werden. Der ORC-Kreislauf kann so ausgelegt sein, dass in der ORC-Turbine keine Kondensation des ORC-Kreislauf-mediums erfolgt. Die ORC-Turbine kann als Expansionsturbine arbeiten. Alternativ zu einem ORC-Kreislauf kann ein Wärmeträgermedium-Kreislauf mit einem Wärmeträgermedium bzw. Wärmetauschermedium auf Basis einer Salzlösung zum Einsatz kommen. Allgemein kann der Temperier-Gemischstrom dazu genutzt werden, um ein Kältemittel, beispielsweise Wasser oder NH₃, aus einem Sorbtions- bzw. Sorptionsmittel, bei dem es sich z. B. um Lithiumbromid, um eine ionische Flüssigkeit oder auch um Wasser handeln kann, auszutreiben.

Ein zweistufiger ORC-Verdampfer des organischen Mediums nach Anspruch 10 ist an die Anforderungen des ORC-Kreislaufmediums besonders gut angepasst. Zwischen der ORC-Vorwärmereinheit und der ORC-Verdampfereinheit kann eine Drossel angeordnet sein.

Eine Gestaltung nach Anspruch 11 nutzt die im ORC-Kreislaufmedium enthaltene Wärme am Austritt der ORC-Turbine zur Vorvorwärmung des ORC-Kreislaufmediums nach der Kondensation und erhöht somit den Wirkungsgrad des ORC-Kreislaufs.

Eine Konzentriereinrichtung nach Anspruch 12 führt zur Möglichkeit, die Wärmeenergie, die einerseits im Kühlwasserstrom, der über den ersten Ausgang abgeleitet wird, und die andererseits im Gemischstrom über den zweiten Ausgang abgeleitet wird, enthalten ist, getrennt zu nutzen.

Eine mögliche Nutzung der Energie des Gemischstroms ergibt sich durch die Ausgestaltung nach Anspruch 13.

Ein ORC-Kreislaufmedium mit den Parametern nach Anspruch 14 hat sich als gut angepasst an die Anforderungen eines ORC-Kreislaufs für die Energie-Rückgewinnungseinrichtung in der Vorrichtung herausgestellt. Eine hohe Wärmekapazität des ORC-Kreislaufmediums reduziert die erforderliche Umwälzmenge des Kreislaufmediums und verkleinert dadurch die notwendige Baugröße der Komponenten in der Energie-Rückgewinnungseinrichtung. Die hohe Wärmekapazität des ORC-Kreislaufmediums entzieht, soweit vorhanden, im Vorwärmer dem Kühlwasser bzw. entzieht dem Gemischtstrom einen entsprechend hohen Wärmeanteil. Das ORC-Kreislaufmedium kann ein trockenes, retrogrades, Expansionsverhalten aufweisen, d. h. eine Sattdampfkurve mit positiver Steigung abseits eines kritischen Punktes im T/S-Diagramm des ORC-Kreislaufmediums. Das ORC-Kreislaufmedium kann in einem Temperaturbereich zwischen 10° C und 120° C und in einem Druckbereich zwischen 1bar und 16bar betrieben werden. Als ORC-Kreislaufmedium kann R245fa, Isobutan oder Isobuten zum Einsatz kommen.

Eine Bypass-Leitung nach Anspruch 15 gewährleistet einen sicheren Betrieb der Vorrichtung mit der Energie-Rückgewinnungseinrichtung.

Die vorstehend beschriebenen Merkmale zu den beiden Aspekten der Vorrichtung können auch in beliebiger Kombination miteinander realisiert sein.

Ausführungsbeispiele der Erfindung werden nachfolgend anhand der Zeichnungen näher erläutert. In dieser zeigen:
- Fig. 1: schematisch eine Übersicht einer Vorrichtung zur Herstellung von Granulaten aus polymeren Werkstoffen, also einer Kunststoff-Granulieranlage;
- Fig. 2: in einer zu Fig. 1 ähnlichen Darstellung eine Übersicht einer alternativen Kunststoff-Granulieranlage;
- Fig. 3: in einer zu Fig. 1 ähnlichen Darstellung eine Übersicht einer alternativen Kunststoff-Granulieranlage;
- Fig. 4: eine Ausführung einer Konzentriereinrichtung, die alternativ zu einer Konzentriereinrichtung zum Einsatz kommen kann, die in der Fig. 3 dargestellt ist;
- Fig. 5: in einer zu Fig. 1 ähnlichen Darstellung eine Übersicht einer alternativen Kunststoff-Granulieranlage;
- Fig. 6: in einer zu Fig. 1 ähnlichen Darstellung eine Übersicht einer alternativen Kunststoff-Granulieranlage; und
- Fig. 7 bis 9: jeweils in einer zu Fig. 1 ähnlichen Darstellung eine Übersicht alternativer Kunststoff-Granulieranlagen.

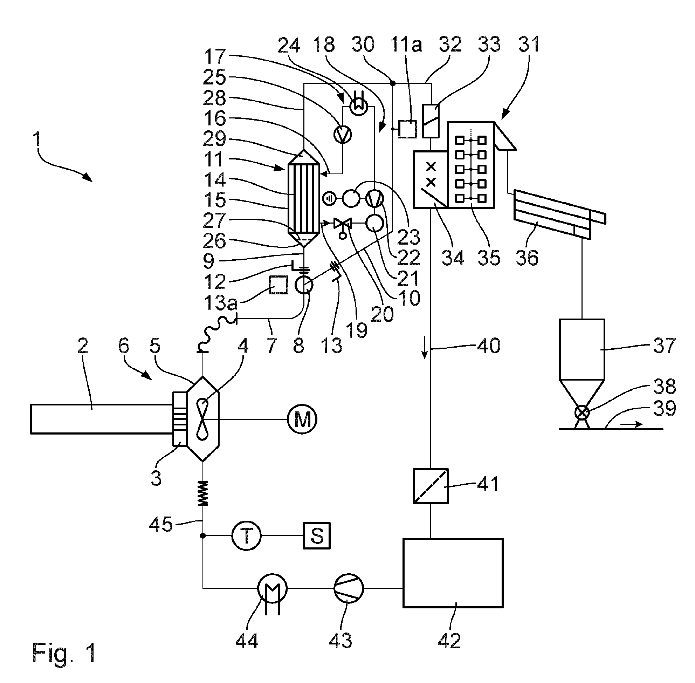

Figur 1 zeigt eine erste Ausgestaltung einer Vorrichtung 1 zur Herstellung von Granulaten aus polymeren Werkstoffen. Die Vorrichtung 1 wird auch als Kunststoff-Granulieranlage bezeichnet.

Die Vorrichtung 1 hat einen Extruder 2 zur Herstellung einer Polymerschmelze. Alternativ zu einem Extruder kann auch eine Schmelzpumpe vorgesehen sein.

Am Ausgang des Extruders 2 ist eine Lochplatte 3 angeordnet, durch die die Polymerschmelze gepresst wird. Im Förderweg der Polymerschmelze direkt hinter der Lochplatte 3 ist eine Schneideinrichtung 4 angeordnet. Die Schneideinrichtung 3 zerschneidet die in der Lochplatte 3 ausgeformten Polymer-Einzelstränge in einzelne Granulatkörner. Der Schneidvorgang findet in einer Granulierhaube 5 statt, durch die zur Kühlung des geschnittenen Granulats Kühlwasser geleitet wird, welches auch als Granulierwasser bezeichnet ist. Der Extruder 2, die Lochplatte 3, die Schneideinrichtung 4 und die Granulierhaube 5 sind Bestandteile einer wassergekühlten Granuliereinrichtung 6 zur Erzeugung des Kunststoff-Granulats. Im Förderweg des Kühlwassers ist der Granulierhaube 5 eine Abführleitung 7 nachgeordnet, die mit einem Ausgang der Granulierhaube 5 in Fluidverbindung steht. Die Abführleitung 7 dient zum Abführen eines Ausgangs-Gemischstroms aus der Granulierhaube 5, der das erzeugte Kunststoff-Granulat und das durch die Granulierhaube 5 hindurchgeleitete Kühlwasser enthält.

Im weiteren Förderweg der Abführleitung 7 ist ein Bypass-Abzweig 8 angeordnet. Dort verzweigt sich die Abführleitung 7 in eine Wärmetauscher-Zuleitung 9 und in eine Bypass-Leitung 10. Die Wärmetauscher-Zuleitung 9 steht mit einem Granulat-Wärmetauscher 11 in Fluidverbindung. Dieser dient zum Temperieren eines Temperier-Gemischstroms, enthaltend das erzeugte Kunststoff-Granulat und zumindest einen Teil des Kühlwassers. Eine Mengensteuereinheit dient zur Vorgabe einer Fluidmengenverteilung zwischen dem Granulat-Wärmetauscher 11 und der Bypass-Leitung 10. Ein Wasservolumenstrom in der Bypass-Leitung 10 kann über einen Durchfluss-Sensor 11a gemessen werden. Die Mengensteuereinheit kann als umstellbare Weicheneinheit am Ort des Bypass-Abzweigs 8 realisiert sein. Alternativ kann die Mengensteuereinheit durch ansteuerbare Ventile oder durch Absperrorgane 12, 13, z.B. in Form von Klappen oder Schiebern, realisiert sein. Das Absperrorgan 12 ist im Förderweg des Temperier-Gemischstroms zwischen dem Bypass-Abzweig 8 und dem Granulat-Wärmetauscher 11 angeordnet. Das Absperrorgan 13 ist in der Bypass-Leitung 10 nach dem Bypass-Abzweig 8 angeordnet. In einer weiteren Variante kann die Mengensteuereinheit durch ein Quetschventil entweder am Ort des Absperrorgans 12 oder am Ort des Absperrorgans 13 realisiert sein. Mit den Absperrorganen 12, 13 oder mit dem Quetschventil kann eine Regeleinheit 13a in Steuer- bzw. Signalverbindung stehen. Diese Verbindung ist in der Zeichnung nicht dargestellt. Die Regeleinheit 13a steht in ebenfalls nicht dargestellter Weise mit dem Durchfluss-Sensor 11a in Signalverbindung. In der Regeleinheit 13a wird ein Durchfluss-Istwert durch die Bypass-Leitung 10, der über den Durchfluss-Sensor 11a gemessen wird, mit einem vorgegebenen Durchfluss-Sollwert verglichen und, sofern die Abweichung einen vorgegebenen Toleranzwert überschreitet, durch Ansteuerung der Weicheneinheit, der Absperrorgane 12, 13 oder des Quetschventils auf den Sollwert geregelt.

Der Granulat-Wärmetauscher 11 dient zum Wärmeaustausch zwischen dem Temperier-Gemischstrom und einem ORC (Organic Rankine Cycle)-Kreislaufmedium. Das ORC-Kreislaufmedium stellt ein Übertragungs-Wärmetauschermedium zur Wärmeübertragung im Granulat-Wärmetauscher 11 dar. Der Granulat-Wärmetauscher 11 ist als Rohrbündel-Wärmetauscher ausgestaltet. Der Temperier-Gemischstrom wird durch gerade verlaufende Wärmetauscherrohre 14 des Rohrbündels von unten nach oben, also entgegen einer Schwerkraftwirkung, gefördert. Die Wärmetauscherrohre 14 des Granulat-Wärmetauschers 11 stellen eine Mehrzahl von parallel, also nicht in Reihe, verlaufender Fluidpassagen für den Temperier-Gemischstrom dar.

Alternativ zu einem geraden Verlauf können die Wärmetauscherrohre 14 auch einen U-förmig gebogenen Verlauf aufweisen. Die Wärmetauschrohre 14 können einen viermal bis zehnmal so großen Durchmesser haben wie der typische Durchmesser der erzeugten Granulatkörner. Anstelle eines Rohrbündel-Wärmetauschers kann der Granulat-Wärmetauscher 11 auch als Platten-Wärmetauscher nach Art beispielsweise der EP 0 444 338 B1 ausgestaltet sein, der ebenfalls eine Mehrzahl von parallel verlaufenden Fluidpassagen für den Temperier-Gemischstrom aufweist.

Im oberen Bereich eines zylindrischen Wärmetauscherbehälters 15 des Granulat-Wärmetauschers 11, in dem das Rohrbündel angeordnet ist, mündet in den Wärmetauscherbehälter 15 ein Einlass 16 für das ORC-Kreislaufmedium ein. Der Einlass 16 ist Bestandteil eines ORC-Kreislaufes 17 einer Energie-Rückgewinnungseinrichtung 18 zur Rückgewinnung von Energie aus einem Rückgewinnungs-Kühlwasserstrom, der zumindest einen Teil des Kühlwassers des Ausgangs-Gemischstroms enthält. Im Beispiel der Fig. 1 ist der Rückgewinnungs-Kühlwasserstrom dann mit dem Ausgangs-Gemischstrom identisch, wenn die Bypass-Leitung 10 geschlossen ist.

Im unteren Bereich des Wärmetauscherbehälters 15 mündet aus diesem ein Auslass 19 des ORC-Kreislaufs 17 aus. Dem Auslass 19 ist in der Förderrichtung des ORC-Kreislaufmediums eine Drossel 20 nachgeordnet. Die Drossel 20 hält das ORC-Kreislaufmedium im Granulat-Wärmetauscher 11 unter einem Druck, der ausreichend ist, damit das ORC-Kreislaufmedium im Granulat-Wärmetauscher 11 nicht verdampft. Der Drossel 20 ist im Förderweg des ORC-Kreislaufmedium im ORC-Kreislauf 17 eine Verdampfereinheit 21 nachgeordnet. Die Verdampfereinheit 21 hat einen Verdampferbehälter und ist neben dem Granulat-Wärmetauscher 11, der eine ORC-Vorwärmereinheit bildet, Bestandteil eines ORC-Verdampfers. Der Verdampfereinheit 21 ist im Förderweg des ORC-Kreislaufmediums im ORC-Kreislauf 17 eine ORC-Turbine 22 nachgeordnet. Die ORC-Turbine 22 steht mit einem Generator 23 in mechanischer Verbindung. Der Generator 23 speist den erzeugten Strom in ein Stromnetz ein. Der ORC-Turbine 22 ist im Förderweg des ORC-Kreislauf-mediums im ORC-Kreislauf 17 ein ORC-Kondensator 24 nachgeordnet. Dem ORC-Kondensator 24 ist im Förderweg des ORC-Kreislaufs 17 eine ORC-Pumpe 25 zur umlaufenden Förderung des ORC-Kreislaufmediums im ORC-Kreislauf 17 nachgeordnet.

Das ORC-Kreislaufmedium hat eine Verdampfungsenthalpie im Bereich zwischen 0 und 2600 kJ/kg sowie eine Wärmekapazität im Bereich zwischen 0 und 6 kJ/kgK. Das ORC-Kreislaufmedium kann ein trockenes, also retrogrades, Expansionsverhalten haben. Das ORC-Kreislaufmedium hat also eine Sattdampfkurve mit positiven Steigungen im T/S-Diagramm des Kreislaufmediums. Das T/S-Diagramm gibt dabei die Abhängigkeit zwischen der absoluten Temperatur T und der Entropie S des Kreislaufmediums an. Der ORC-Kreislauf 17 wird in einem Temperaturbereich zwischen 10° C und 120° C und in einem Druckbereich zwischen 1bar und 16bar betrieben. Als ORC-Kreislaufmedium kommen R245fa und Isobutan oder Isobuten zum Einsatz.

Im Bereich eines einlassseitigen Erweiterungsabschnitt 26 des Wärmetauscherbehälters 15 zwischen der Wärmetauscher-Zuleitung 9 und dem Rohrbündel ist ein Rückhaltesieb 27 im Strömungsweg des Temperier-Gemischstroms angeordnet, mit dem Kunststoffagglomerate zurückgehalten werden können.

Eine Wärmetauscher-Abführleitung 28, die über einen Verengungsabschnitt 29 des Wärmetauscherbehälters 15 mit dem Rohrbündel des Granulat-Wärmetauschers 11 in Fluidverbindung steht, vereinigt sich über eine Bypass-Einmündung 30 mit der Bypass-Leitung 10. Die Bypass-Leitung 10 überbrückt also den Granulat-Wärmetauscher 11 zwischen der Granuliereinrichtung 6 und einer nachgeordneten Trocknungseinrichtung 31 zum Trocknen des Kunststoff-Granulats. Am Eingang der Trocknungseinrichtung 31 ist in einer nach der Bypass-Einmündung 30 verlaufenden Gemischstromleitung 32 für den Temperier-Gemischstrom ein Agglomerat-Abscheider 33 angeordnet. Diesem in der Gemischstromleitung 32 nachgeordnet ist ein Granulat-Wasser-Abscheider 34 mit einem im Förderweg des Kunststoff-Granulats nachgeordneten Trockner 35. Im Granulat-Förderweg dem Trockner 35 nachgeordnet ist eine Siebmaschine 36 zum Sieben des getrockneten Kunststoff-Granulats. Der Siebmaschine 36 ist im Förderweg des Granulates nachgeordnet ein Granulatbehälter 37 in Form eines Lagersilos. Austragseitig ist unterhalb des Granulatbehälters 37 ein Austragsorgan in Form einer Zellenradschleuse 38 angeordnet. Der Zellenradschleuse 38 ist ein Förderweg 39 eines ansonsten nicht dargestellten pneumatischen Fördersystems nachgeordnet. Mit dem pneumatischen Fördersystem kann das erzeugte und getrocknete Kunststoff-Granulat einem Zielort zugeführt werden.

Das im Granulat-Wasser-Abscheider 34 abgeschiedene Kühlwasser verlässt diesen über eine Kühlwasserleitung 40. In dieser ist im weiteren Förderweg des Kühlwassers eine Siebeinrichtung 41 angeordnet. Im Förderweg des Kühlwassers der Siebeinrichtung 41 nachgeordnet ist ein Kühlwassertank 42. Dem Kühlwassertank 42 im Förderweg des Kühlwassers nachgeordnet ist eine Förderpumpe 43 zur umlaufenden Kreislaufförderung des Kühlwassers. Der Förderpumpe 43 ist im Förderweg des Kühlwassers nachgeordnet ein Kühlwasser-Wärmetauscher 44. Aus dem Kühlwasser-Wärmetauscher 44 wird das Kühlwasser über eine Zuführleitung 45 wieder der Granulierhaube 5 zugeführt. Mit dem Kühlwasser-Wärmetauscher 44 wird das Kühlwasser vor der Granulierhaube 5 auf eine vorgegebene Granuliertemperatur gebracht. Die Kühlwassertemperatur am Eintritt in die Granulierhaube 5 beträgt typischerweise 40° C bis 70° C. Das Kühlwasser erwärmt sich durch Wärmeaustausch mit den heißeren Granulatkörnern, die in der Granuliereinrichtung 6 erzeugt werden, um typisch 5K bis 20K.

Mit der Zuführleitung 45 kann ein Temperatursensor T verbunden sein. Dieser kann eine Ist-Temperatur des Kühlwassers am Eingang der Granulierhaube 5 messen.

Über den Granulat-Wärmetauscher 11 ist eine effiziente Vorwärmung des ORC-Kreislaufmediums zur nachfolgenden Verdampfung von diesem in der Verdampfereinheit 21 gewährleistet. Das ORC-Kreislaufmedium wird im Granulat-Wärmetauscher 11 im Kreuzgegenstrom vorgewärmt. Der mit der Energie-Rückgewinnungseinrichtung 18 erzeugte Strom kann in ein Versorgungsnetz zurückgespeist werden. Dadurch wird eine Nettostromaufnahme der Gesamtanlage entsprechend vermindert. Zumindest anteilig kann der mit der Energie-Rückgewinnungseinrichtung 18 erzeugte Strom also zum Betrieb von Komponenten der Kunststoff-Granulieranlage genutzt werden, beispielsweise zum Betrieb der Förderpumpe 43, zum Betrieb eines Antriebs M der Schneideinrichtung 4 oder zum Betrieb des Extruders 2. Auch die Zellenradschleuse 38 kann mit der von der Energie-Rückgewinnungseinrichtung 18 erzeugten Energie betrieben werden.

Beim Anfahren der Kunststoff-Granulieranlage wird die Wärmetauscher-Zuleitung 9 verschlossen und der Ausgangs-Gemischstrom wird zunächst über die Bypass-Leitung 10 geleitet. Auch während des Betriebs der Anlage kann durch entsprechende Umstellung der Granulat-Wärmetauscher 11 über die Bypass-Leitung 10 überbrückt werden.

Eine Maschenweite des Rückhaltesiebs 27 ist kleiner als ein Innendurchmesser der Wärmetauscherrohre 14.

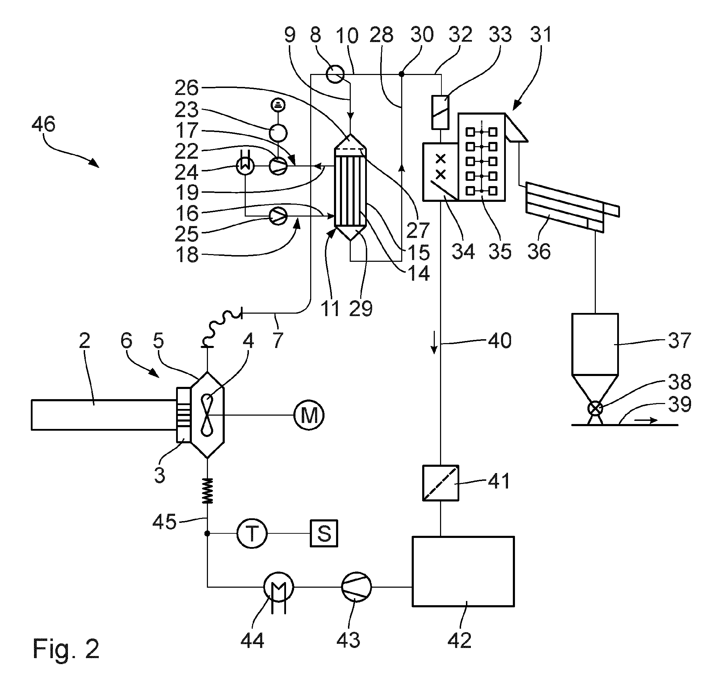

Figur 2 zeigt eine alternative Ausführung einer Vorrichtung 46 zur Herstellung von Granulaten aus polymeren Werkstoffen, die an Stelle der Vorrichtung 1 zum Einsatz kommen kann. Komponenten und Funktionen, die denjenigen entsprechen, die vorstehend unter Bezugnahme auf die Figur 1 bereits erläutert wurden, tragen die gleichen Bezugsziffern und werden nicht nochmals im Einzelnen diskutiert.

Im Unterschied zur Förderung des Temperier-Gemischstrom durch den Granulat-Wärmetauscher entgegen der Schwerkraftwirkung bei der Ausführung nach Figur 1 erfolgt die Förderung des Temperier-Gemischstroms durch den Granulat-Wärmetauscher 11 bei der Ausführung nach Figur 2 unter Schwerkrafteinfluss durch die Fluidpassagen, also durch die Wärmetauscherrohre 14. Im Vergleich zur Anordnung nach Figur 1 ist der Granulat-Wärmetauscher 11 bei der Ausführung nach Figur 2 also kopfüber angeordnet. Entsprechend ist auch der Einlass 16 für das ORC-Kreislaufmedium im unteren Bereich des Wärmetauschbehälters 15 angeordnet und der Auslass 19 im oberen Bereich des Wärmetauscherbehälters 15. Der Granulat-Wärmetauscher 11 nach Figur 2 kann sowohl als ORC-Vorwärmereinheit als auch als ORC-Verdampfereinheit arbeiten. Beim ORC-Kreislauf 17 nach Figur 2 stellt der Granulat-Wärmetauscher 11 gleichzeitig einen ORC-Verdampfer dar. Die Drossel 20 im ORC-Kreislauf 17 nach Figur 1 kann im ORC-Kreislauf nach Figur 2 entfallen. Auch die ORC-Verdampfereinheit 21 entfällt im ORC-Kreislauf 17 nach Figur 2. Alternativ zu den Anordnungsmöglichkeiten des Granulat-Wärmetauschers 11 nach den Figuren 1 und 2 kann der Granulat-Wärmetauscher 11 auch mit horizontal oder U-förmig verlaufenden Wärmetauscherrohren 14 oder Wärmetauscherplatten, die jeweils eine Mehrzahl parallel verlaufender Fluidpassagen für den Temperier-Gemischstrom vorgeben, ausgeführt sein.

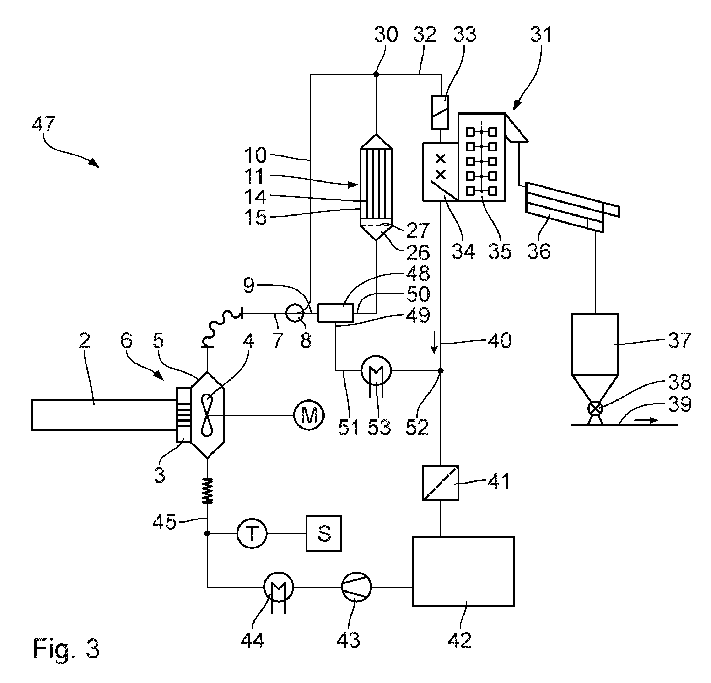

Figur 3 zeigt eine alternative Ausführung einer Vorrichtung 47 zur Herstellung von Granulaten aus polymeren Werkstoffen, die an Stelle der Vorrichtung 1 zum Einsatz kommen kann. Komponenten und Funktionen, die denjenigen entsprechen, die vorstehend unter Bezugnahme auf die Figur 1 bereits erläutert wurden, tragen die gleichen Bezugsziffern und werden nicht nochmals im Einzelnen diskutiert.

In der Figur 3 ist der ORC-Kreislauf 17 weggelassen, der bei der Vorrichtung 47 nach Figur 3 genauso ausgeführt sein kann wie bei der Vorrichtung 1 nach Figur 1.

Bei der Vorrichtung 47 ist im Förderweg des Temperier-Gemischtstroms nach dem Bypass-Abzweig 8 eine Konzentriereinrichtung 48 angeordnet. Soweit die Wärmetauscher-Zuleitung 9 zumindest teilweise geöffnet ist, wird ein Gemischstrom-Eingang der Konzentriereinrichtung 48 von der Abführleitung 7 gespeist. Die Konzentriereinrichtung 48 kann nach Art derjenigen gestaltet sein, die in der DE 100 61 892 C1 beschrieben ist.

Die Konzentriereinrichtung 48 hat einen ersten Ausgang 49 zur weiteren Förderung eines in der Konzentriereinrichtung 48 vom Temperier-Gemischstrom abgeschiedenen Kühlwassers und einen zweiten Ausgang 50 zur weiteren Förderung des aufkonzentrierten Temperier-Gemischstroms, der das erzeugte Kunststoff-Granulat und den nicht abgeschiedenen Teil des Kühlwassers enthält und dem Granulat-Wärmetauscher 11 zugeleitet wird.

Der erste Ausgang 49 der Konzentriereinrichtung 48, also der Kühlwasser-ausgang, steht über eine Abgangs-Rohrleitung 51 und eine Kühlwasser-Einmündung 52 mit der Kühlwasserleitung 40 zwischen dem Granulat-Wasser-Abscheider 34 und der Siebeinrichtung 41 in Fluidverbindung. In der Abgangs-Rohrleitung 51 ist ein weiterer Kühlwasser-Wärmetauscher 53 angeordnet. Die Abgangs-Rohrleitung 51 stellt eine Rückführleitung für das Kühlwasser hin zur Granuliereinrichtung 6 dar. Vergleichbar zur Regelung des Kühlwasserstroms in der Bypass-Leitung 10 kann auch der Volumenstrom in der Abgangs-Rohrleitung 51 mit Hilfe eines entsprechenden Durchfluss-Sensors in der Abgangs-Rohrleitung 51 und entsprechenden Stellarmaturen am Ort der Konzentriereinrichtung 48 oder Absperrorganen in den Ausgängen 49, 50, geregelt werden.

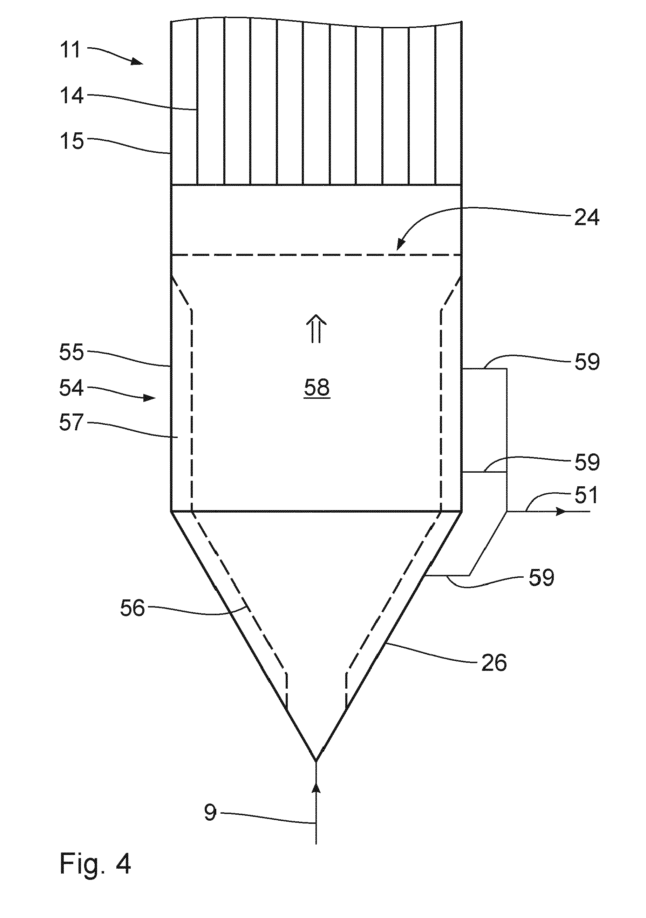

Die Konzentriereinrichtung 48 kann alternativ auch am Eingang des Granulat-Wärmetauschers 11 in diesen integriert sein. Eine solche Ausgestaltung einer Konzentriereinrichtung 54, die an Stelle der Konzentriereinrichtung 48 zum Einsatz kommen kann, ist in der Figur 4 dargestellt. Die Konzentriereinrichtung 54 ist im Bereich des Erweiterungsabschnitts 26 und eines unteren Abschnitts 55 des Wärmetauscherbehälters 15 des Granulat-Wärmetauschers 11 angeordnet. Beabstandet zu einer Innenwand des Erweiterungsabschnitts 26 und des unteren Abschnitts 55 des Wärmetauscherbehälters 15 ist ein Rückhaltesieb 56 angeordnet. Dieses trennt eine Ringleitung 57 für das in der Konzentriereinrichtung 54 abgeschiedene Kühlwasser vom Inneren 58 des Wärmetauscherbehälters 15, so dass das Granulat nicht in die Ringleitung 57 eintreten kann. Die Ringleitung 57 ist über mehrere Verbindungs-Leitungsabschnitte 59 mit der Abgang-Rohrleitung 51 in Fluidverbindung. Über die Abgangs-Rohrleitung 51 wird ein Teil des Kühlwassers des Ausgangs-Gemischstroms abgeschieden. Der Rest des Kühlwassers verbleibt im Temperier-Gemischstrom. Im Granulat-Wärmetauscher 11 kann der so konzentrierte Temperier-Gemischstrom stärker abgekühlt werden. Das in der Abgangs-Rohrleitung 51 abgeschiedene Kühlwasser kann mit dem Kühlwasser-Wärmetauscher 53 gekühlt werden.

Ein Leitungsweg der Abführleitung 7 zwischen der Granulierhaube 5 und der Konzentriereinrichtung 48 bzw. 54 ist kurz und beträgt z. B. nur wenige Meter.

Über eine Steuereinrichtung S, die mit dem Temperatursensor T und dem Kühlwasser-Wärmetauscher 44 und ggf. mit dem Kühlwasser-Wärmetauscher 53 in Signalverbindung steht, kann eine Wärmetauscherleistung so geregelt werden, dass die Ist-Temperatur des Kühlwassers am Eingang der Granulierhaube 5 mit einer vorgegebenen Soll-Temperatur innerhalb ebenfalls vorgegebener Grenzen übereinstimmt.

Nachfolgend wird ein Zahlenbeispiel für den Betrieb der Vorrichtung 47 als Kunststoff-Granulieranlage für Polyolefine gegeben. Ein Massenstrom vom 50 t/h Polyolefingranulat wird granuliert. Eine Eintrittstemperatur des Granulierwassers in die Granulierhaube 5 beträgt 80° C. Eine im Kühlwasserkreislauf transportierte Kühlwassermenge beträgt 500 m³/h. Im Ausgangs-Gemischstrom erwärmt sich durch Abkühlung des heißen Granulats das dort enthaltene Kühlwasser auf eine Temperatur von etwa 95° C. Der Ausgangs-Gemischstrom wird in der Konzentriereinrichtung 48 bzw. 54 in einen Kühlwasser-Teilstrom von 250 m³/h mit einer Temperatur von 95° C, der über die Abgangs-Rohrleitung 51 weitergefördert wird, und in den Temperier-Gemischstrom von ebenfalls 250 m³/h Kühlwasser aufgeteilt, der dem Granulat-Wärmetauscher 11 zugeführt wird. Der Temperier-Gemischstrom gibt Wärme an das ORC-Kreislaufmedium ab. Hierdurch wird der Temperier-Gemischstrom auf eine Temperatur von 65° C abgekühlt. Bei der anschließenden Trocknung des im Temperier-Gemischstrom enthaltenen Kunststoff-Granulats wird dieses aufgrund der Abkühlung schonender getrocknet. Es wird weniger Abrieb bzw. Staub beim Trocknen generiert. Im Kühlwassertank 42 werden die beiden Kühlwasser-Teilströme mit 65° C (abgeschieden im Granulat-Wasser-Abscheider 34 bzw. in der Trocknungseinrichtung 31) und 95° C (abgeschieden in der Konzentriereinrichtung 48 bzw. 54) zu einer Kühlwassertemperatur von etwa 80° C gemischt. Eine Temperierung des Kühlwassers mit dem Kühlwasser-Wärmetauscher 53 in der Abgangs-Rohrleitung 51 ist nicht erforderlich, weswegen dieser Kühlwasser-Wärmetauscher 53 auch entfallen kann. Etwaige Temperatur-Restunter-schiede können über den Kühlwasser-Wärmetauscher 44 ausgeglichen werden.

Nachfolgend wird ein weiteres Zahlenbeispiel beim Betrieb der Vorrichtung 47 als Kunststoff-Granulieranlage bei der PC (Polycarbonat)-Heißgranulierung erläutert. Dabei tritt das Kühlwasser in die Granulierhaube 5 mit einer Temperatur von etwa 90° C ein. Beim Austritt aus der Granulierhaube 5 hat der Temperier-Gemischstrom eine Temperatur von 110° C. In der Konzentriereinrichtung 48 bzw. 54 wird der Ausgangs-Gemischstrom aufgeteilt in einen Abgangs-Kühlwasserstrom durch die Abgangs-Rohrleitung 51, in dem etwa die Hälfte des gesamten Kühlwasserstroms gefördert wird, und in den Temperier-Gemischstrom mit der anderen Hälfte des Kühlwasserstroms. Im Granulat-Wärmetauscher 11 wird der Temperier-Gemischstrom auf etwa 70° C abgekühlt. Der überhitzte Kühlwasserstrom wird unter geodätischem Überdruck im Kühlwasserkreislauf geführt.

Im Kühlwassertank 42 mischen sich die beiden Teilströme mit den Temperaturen von 70° C und 110° C zu einer mittleren Temperatur von 90° C, die der erforderlichen Temperatur am Eingang der Granulierhaube 5 entspricht.

Im Granulat-Wärmetauscher 11 kann, eine entsprechende Länge der Wärmetauscherrohre 14 vorausgesetzt, über den statischen Wasserdruck eine Dampfblasenbildung auch bei einer Überhitzung des Kühlwassers vermieden werden.

Anstelle eines ORC-Kreislaufs 17 kann eine Energierückgewinnung auch durch Einsatz eines weiteren Wärmetauschers zur Erwärmung des Kühlwassers realisiert werden, soweit eine Kühlwassererwärmung im Kühlwasserkreislauf je nach Kunststoff-Herstellungsprozess erforderlich ist. Die Erwärmung des Übertragungs-Wärmetauschermedium im Granulat-Wärmetauscher 11 kann auch zum Betrieb einer Wärmepumpe genutzt werden.

Auch bei der PC-Heißgranulierung kann der Kühlwasser-Wärmetauscher 53 in der Abgangs-Rohrleitung 51 entfallen.

Nachfolgend wird der Betrieb der Vorrichtung 47 am Beispiel der Herstellung von LDPE (Low Density Polyethylen)-Granulat beschrieben. Das Kühlwasser tritt dabei in die Granulierhaube 5 mit einem Strom von 500 m³/h und einer Temperatur von 60° C ein. Am Austritt der Granulierhaube 5 hat der Ausgangs-Gemischtstrom eine Temperatur von ca. 75° C. In der Konzentriereinrichtung 48 bzw. 54 wird der Ausgangs-Gemischstrom aufgeteilt in den Temperier-Gemischstrom mit 150 m³/h Kühlwasser und in den Abgangs-Kühlwasserstrom in der Abgangs-Rohrleitung 51 mit einem Strom von 350 m³/h Kühlwasser. Im Granulat-Wärmetauscher 11 wird der Temperier-Gemischstrom auf eine Temperatur von 90° C erwärmt.

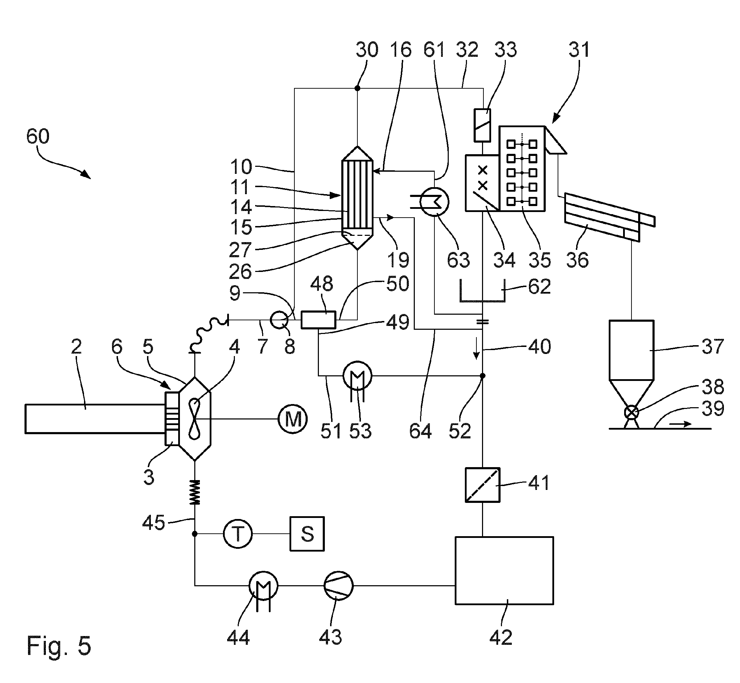

Figur 5 zeigt eine alternative Ausführung einer Vorrichtung 60 zur Herstellung von Granulaten aus polymeren Werkstoffen, die an Stelle der Vorrichtung 1 zum Einsatz kommen kann. Komponenten und Funktionen, die denjenigen entsprechen, die vorstehend unter Bezugnahme auf die Figur 1 bereits erläutert wurden, tragen die gleichen Bezugsziffern und werden nicht nochmals im Einzelnen diskutiert.

Bei der Vorrichtung 60 entfällt der ORC-Kreislauf. Als Übertragungs-Wärmetauschermedium, welches seine Wärme im Granulat-Wärmetauscher 11 mit dem Temperier-Gemischstrom tauscht, dient das Kühlwasser selbst. Der Einlass 16 für das Übertragungs-Wärmetauschermedium steht mit der Kühlwasserleitung 40 am Ausgang des Granulat-WasserAbscheiders 34 in Fluidverbindung. In einer Zuführleitung 61 für das Übertragungs-Wärmetauschermedium zwischen dem Ausgang des Granulat-Wasser-Abscheiders 34 und dem Einlass 16 ist im Förderweg des Kühlwassers zunächst ein Kühlwasser-Zwischenbehälter 62 und im weiteren Förderweg ein Vor-Wärmetauscher 63 zum Erwärmen des Kühlwassers vor dem Einlass 16 angeordnet.

Der Auslass 19 für das Übertragungs-Wärmetauschermedium steht über eine Rückführleitung 64 mit dem Abschnitt der Kühlwasserleitung 40 hin zum Kühlwassertank 42 in Fluidverbindung. In diesem Abschnitt ist auch die Kühlwasser-Einmündung 52 der Abführ-Rohrleitung 51 angeordnet. Der aus dem Granulat-Wärmetauscher 11 austretende Temperier-Gemischstrom tritt in die Trocknungseinrichtung 31 ein. Das dort abgeschiedene Kühlwasser wird im Vor-Wärmetauscher 63 auf eine Temperatur von 100° C erwärmt und dient dazu, das erzeugte LDPE-Granulat im Granulat-Wärmetauscher 11 zum Entgasen des LDPE zu erhitzen. Dabei kühlt das Übertragungs-Wärmetauschermedium auf 85° C ab. Die beiden Kühlwasser-Wärmetauscher 44 und 53 werden so betrieben, dass das Kühlwasser in der Zuführleitung 45 und am Eingang der Granulierhaube 5 wieder die erforderliche Temperatur von 60° C aufweist.

Bei der Vorrichtung 60 ist der Granulatbehälter 37 als Entgasungssilo ausgeführt.

Das LDPE kann das Copolymer Ethylen-Vinylacetat aufweisen. Mit steigendem Gehalt an Ethylen-Vinylacetat-Copolymer wird die Wassertemperatur zur Granulierung in der Granulierhaube 5 abgesenkt.

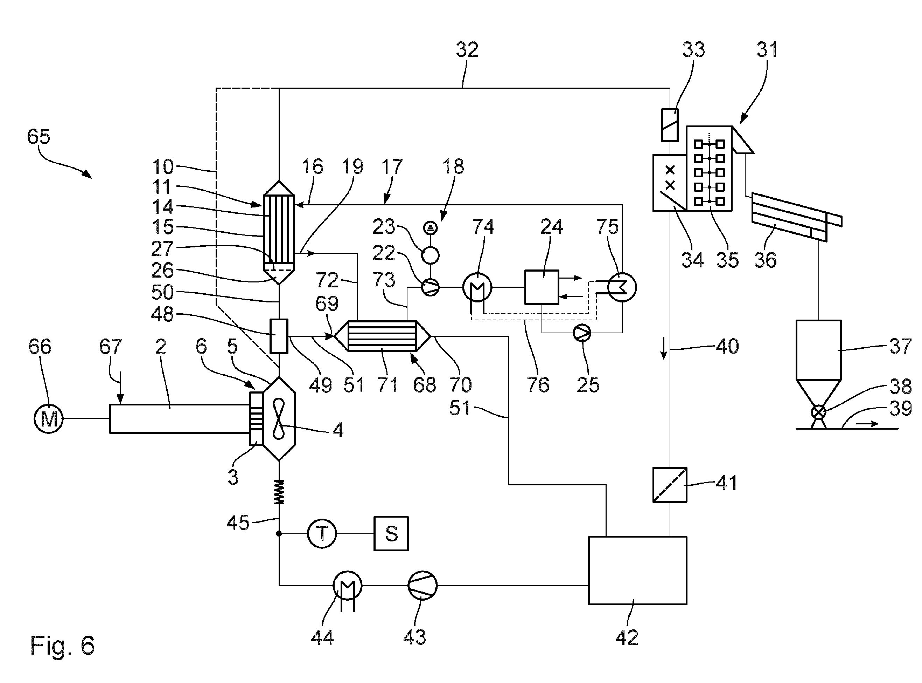

Figur 6 zeigt eine alternative Ausführung einer Vorrichtung 65 zur Herstellung von Granulaten aus polymeren Werkstoffen, die an Stelle der Vorrichtung 1 zum Einsatz kommen kann. Komponenten und Funktionen, die denjenigen entsprechen, die vorstehend unter Bezugnahme auf die Figur 1 bereits erläutert wurden, tragen die gleichen Bezugsziffern und werden nicht nochmals im Einzelnen diskutiert.

In der Figur 6 ist schematisch ein Antriebsmotor 66 für den Extruder 2 dargestellt. Schematisch ist durch einen Pfeil 67 in der Figur 6 eine Zufuhr von pulverförmigem Ausgangsmaterial für die Extrusion im Extruder 2 angedeutet.

Ein ORC-Verdampfer umfasst bei der Vorrichtung 65 neben dem Granulat-Wärmetauscher 11 als ORC-Vorwärmereinheit noch eine ORC-Verdampfereinheit 68, die im ORC-Kreislauf 17 zwischen dem Granulat-Wärmetauscher 11 und der ORC-Turbine 22 angeordnet ist. Die ORC-Verdampfereinheit 68 ist in der Abgangs-Rohrleitung 51 der Konzentriereinrichtung 48 angeordnet. Die ORC-Verdampfereinheit 68 hat einen Kühlwasser-Eingang 69 und einen Kühlwasser-Ausgang 70. Die ORC-Verdampfereinheit 68 ist vergleichbar zur Granulat-Wärmetauschereinrichtung 11 ebenfalls als Rohrbündel-Wärmetauscher mit horizontal verlaufenden Wärmetauscherrohren ausgeführt, in denen das Kühlwasser zwischen dem Kühlwasser-Eingang 69 und dem Kühlwasser-Ausgang 70 in mehreren Wegen hin- und hergeführt wird. Auch andere Bauarten der Verdampfereinheit 68 sind möglich. In einen Verdampferbehälter 71 der ORC-Verdampfereinheit 68 mündet mantelseitig ein ORC-Einlass 72 des ORC-Kreislaufs 17 ein und ein ORC-Auslass 73 des ORC-Kreislaufs 17 aus. In der Figur 6 ist ein Wärmetauscherbetrieb der ORC-Verdampfereinheit 68 im Gleichstrom angedeutet. Auch ein Gegenstrom-Betrieb der Wärmeübertragung zwischen dem Kühlwasser und dem ORC-Kreislaufmedium in der ORC-Verdampfereinheit 68 ist möglich.

Im ORC-Kreislauf 17 ist zwischen der ORC-Turbine 22 und dem ORC-Kondensator 24 ein ORC-Kühler 74 zur Abgabe von Wärme vom ORC-Kreislaufmedium auf ein weiteres Übertragungs-Wärmetauschermedium, beispielsweise auf Wasser, angeordnet. Im ORC-Kreislauf 17 ist zwischen der ORC-Pumpe 25 und dem Granulat-Wärmetauscher 11 ein ORC-Vorwärmer 75 zur Abgabe von Wärme von dem weiteren Übertragungs-Wärmetauschermedium auf das ORC-Kreislaufmedium angeordnet. Der ORC-Kühler 74 steht mit dem ORC-Vorwärmer 75 über einen Übertragungs-Wärmetauschermedium-Kreislauf 76 in Fluidverbindung, der in der Figur 6 gestrichelt angedeutet ist.

Bei der Vorrichtung 65 steht der erste Ausgang 49 der Konzentriereinrichtung 48 mit der ORC-Verdampfereinheit 68 in Fluidverbindung. Die ORC-Vorwärmeinheit, also der Granulat-Wärmetauscher 11, steht mit dem zweiten Ausgang 50 der Konzentriereinrichtung 48 in Fluidverbindung.

Wie gestrichelt in der Figur 6 angedeutet, kann auch die Vorrichtung 65 zwischen der Granuliereinrichtung 6 und der Trocknungseinrichtung 31 eine Bypass-Leitung 10 aufweisen.

Nachfolgend wird wiederum ein Zahlenbeispiel bei der Herstellung von Polyolefin-Granulat mit der Vorrichtung 65 gegeben: Das Kühlwasser tritt in die Granulierhaube 5 mit einer Temperatur von 80° C und einem Kühlwasserstrom von 500 m³/h ein. Die Granuliereinrichtung 6 produziert einen Massenstrom von 50 t/h Polyolefin-Granulat. Der Ausgangs-Gemischstrom verlässt die Granulierhaube 5 mit einer Temperatur von 93° C. In der Konzentriereinrichtung 48 erfolgt ein Aufteilen des Ausgangs-Gemischstrom in einen Kühlwasserstrom in der Abgangs-Rohrleitung 51 von 400 m³/h und in den Temperier-Gemischstrom mit einem Wasseranteil von 100 m³/h. Der Temperier-Gemischstrom besteht aus einem Kühlwasserstrom von 100 m³/h und einem Kunststoffgranulat-Volumenstrom von 50 m³/h bis 55 m³/h. Im Granulat-Wärmetauscher 11 wird der Temperier-Gemischstrom auf 75° C abgekühlt. In der ORC-Verdampfereinheit 68 wird das mit einer Temperatur von 93° C eintretende Kühlwasser auf eine Temperatur von 82° C abgekühlt. In der Trocknungseinrichtung 31 wird das Polyolefin-Granulat abgeschieden, so dass eine Produktion von 50 t/h realisiert ist. Das in der Trocknungseinrichtung 31 abgeschiedene Kühlwasser mit einer Temperatur von 75° C und das die ORC-Verdampfereinheit 68 verlassende Kühlwasser mit einer Temperatur von 82° C vermischen sich auf eine Mischtemperatur im Kühlwassertank 42 von etwa 80° C. Grundsätzlich kann auf weitere Wärmetauscher zur Regelung der Kühlwassertemperatur bei der Vorrichtung 65 verzichtet werden. Alternativ ist es möglich, die Wärmetauscher 44 bzw. 53 einerseits in der Zuführleitung 45 und andererseits in der Abgangs-Rohrleitung 51 zwischen der ORC-Verdampfereinheit 68 und den Kühlwassertank 42 vorzusehen. Dies kann für einen Betrieb der Vorrichtung 65 ohne den ORC-Kreislauf 17 genutzt werden.

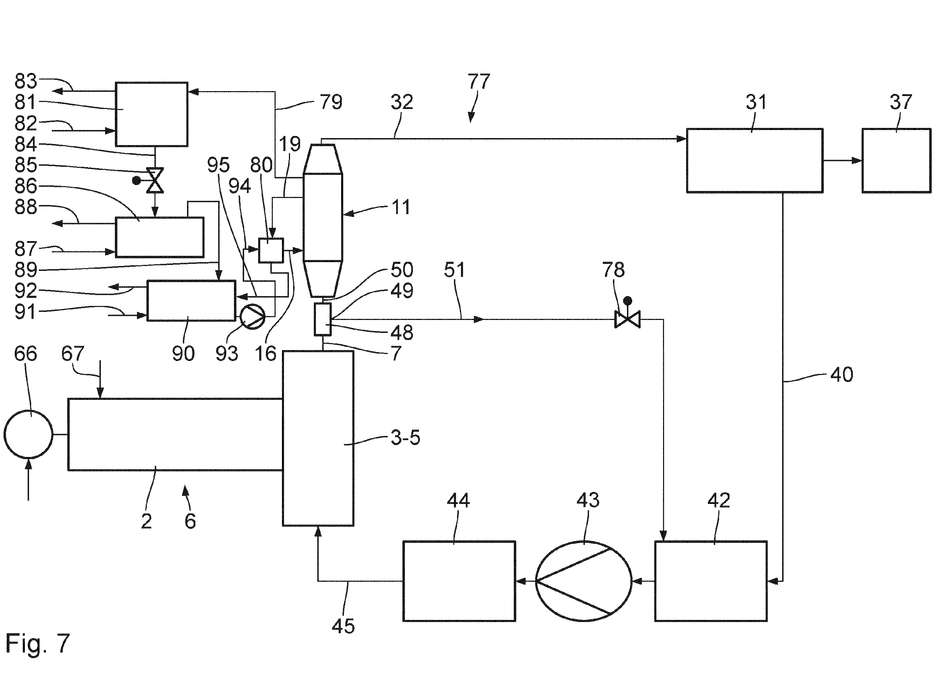

Fig. 7 zeigt eine alternative Ausführung einer Vorrichtung 77 zur Herstellung von Granulaten aus polymeren Werkstoffen, die anstelle der Vorrichtung 1 zum Einsatz kommen kann. Komponenten und Funktionen, die denjenigen entsprechen, die vorstehend unter Bezugnahme auf die Fig. 1 bereits erläutert wurden, tragen die gleichen Bezugsziffern und werden nicht nochmals im Einzelnen diskutiert. Die schematische Darstellung nach Fig. 7 unterscheidet sich im Abstrahierungsgrad von derjenigen nach den Fig. 1 bis 3 und 5, 6.

In der Abgangs-Rohrleitung 51 ist in der Fig. 7 noch ein Absperrventil 78 eingezeichnet. Wird dieses geschlossen, ist die Konzentriereinrichtung 48 inaktiv und der gesamte Granulat-Wasser-Strom fließt durch den Granulat-Wärmetauscher 11.

Bei der Vorrichtung 77 wird der Granulat-Wärmetauscher 11 mit einem Wärmetauschermedium in Form einer in einem Kreislauf geführten Salzlösung betrieben. Geeignete Wärmetauschermedien sind Lithiumbromid oder ionische Flüssigkeiten. Am Eingang des Granulat-Wärmetauschers 11 ist die Temperatur des Wärmetauschermediums, das dem Granulat-Wärmetauscher 11 über den Einlass 16 zugeführt wird, noch gering. Entsprechend ist die Salzkonzentration niedrig. Im Granulat-Wärmetauscher 11 nimmt das Wärmetauschermedium Wärme vom Granulat-Wasser-Strom, also vom Temperier-Gemischstrom, auf und heizt sich im Granulat-Wärmetauscher 11 auf, bis es diesen in flüssiger Form über den Auslass 19 mit hoher Salzkonzentration verlässt. Durch die Erwärmung des Wärmetauschermediums im Granulat-Wärmetauscher 11 verdampft ein Teil des Wärmetauschermediums und verlässt den Granulat-Wärmetauscher 11 über einen Wasserdampf-Auslass 79.

Der Auslass 19 verbindet den Granulat-Wärmetauscher 11 mit einem Rekuperator 80. Der Einlass 16 verbindet den Rekuperator 80 mit dem Granlulat-Wärmetauscher 11. Der Wasserdampf-Auslass 79 verbindet den Granulat-Wärmetauscher 11 mit einem Kondensator 81. In diesem wird der Wasserdampf mit Hilfe von Kühlwasser gekühlt und kondensiert, das dem Kondensator 81 über einen Kühlwasser-Einlass 82 zu- und über einen Kühlwasser-Auslass 83 abgeführt wird. Der Kondensator 81 kann mit Vakuum beaufschlagt sein und das erzeugte Kondensat hat eine sehr niedrige Temperatur im Bereich zwischen 5° C und 8° C. Das Kondensat wird aus dem Kondensator 81 über eine Kondensatleitung 84 abgeführt. Diese kann über ein Absperrventil 85 geschlossen werden. Über die Kondensatleitung 84 wird das Kondensat aus dem Kondensator 81 einem Verdampfer 86 zugeführt. Beim Verdampfen, welches im Verdampfer 86 unter Unterdruck erfolgen kann, kühlt das verdampfende Kondensat ein Wärmeträgermedium ab, welches dem Verdampfer 86 über einen Einlass 87 zu- und über einen Auslass 88 aus diesem abgeführt wird. Bei dem im Verdampfer 86 eingesetzten Wärmeträgermedium kann es sich wiederum um Wasser handeln. Das Wärmeträgermedium hat am Einlass 87 eine Temperatur von 14° C und am Auslass 88, je nach der Temperatur des den Verdampfer 86 zugeführten Kondensats, eine Temperatur von beispielsweise 7° C. Die Leitungen 88 und 87 können Teil eines Kühlwasserkreislaufs sein. Bei der Erzeugung von Kühlwasser in diesem Kreislauf mit der Vorrichtung 77 ist kein Kompressor erforderlich.

Der aus dem Verdampfer 86 über eine Dampfleitung 89 abgeführte Wasserdampf wird in einem Absorber 90 in den Salzlösungs-WärmeträgerKreislauf rückgeführt. Der Inhalt des Absorbers 90 wird mit Kühlwasser gekühlt, welches dem Absorber über einen Einlass 91 zugeführt und aus diesem über einen Auslass 92 abgeführt wird. Im Absorber 90 liegt die Salzlösung also im kalten Zustand vor. Zur Umwälzung der Salzlösung im Salzlösungs-Wärmetauscher-Kreislauf dient eine Umwälzpumpe 93. Diese ist in einer Zuführleitung 94 angeordnet, die den Absorber 90 mit dem Rekuperator 80 verbindet.

Im Rekuperator 80 findet eine Mischung der über den Absorber 90 über die Zuführleitung 94 zugeführten kalten Salzlösung mit der über den Auslass 19 dem Rekuperator 80 ebenfalls zugeführten heißen Salzlösung statt. Der Salzlösung mit einer Mischtemperatur, die höher ist als die Temperatur der Salzlösung in der Zuführleitung 94, wird dem Granulat-Wärmetauscher 11 über den Einlass 16 zugeführt. Über eine Salzlösungs-Rückführleitung 95 steht der Rekuperator 80 mit dem Absorber 90 in Fluidverbindung.

Die Wärme des Granulat-Wasser-Stroms wird im Granulat-Wärmetauscher 11 dazu genutzt, dem Wärmeträgermedium, also der Salzlösung, Wärme zu entziehen. Dieser Wärmentzug wird bei der Vorrichtung 77 nach Fig. 7 in einer Absorptionskälteanlage genutzt. Das Kältemittel, im vorliegenden Beispiel das Wasser, wird in Form von Wasserdampf aus dem Wärmeträgermedium, also der Salzlösung, ausgetrieben. Der Granulat-Wärmetauscher 11 wird bei der Vorrichtung 77 daher auch als Austreiber bezeichnet.

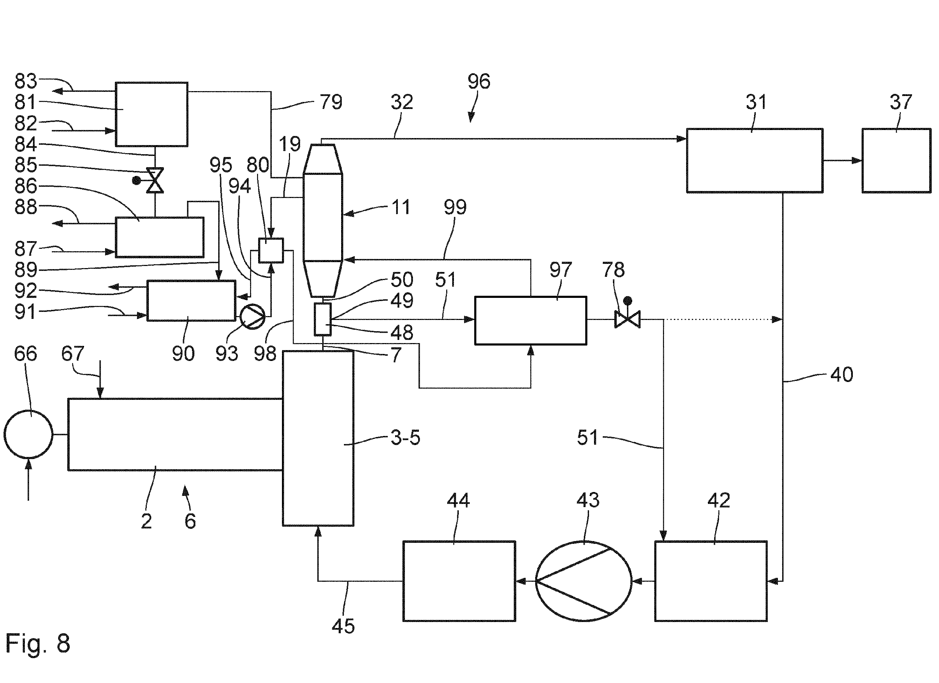

Fig. 8 zeigt eine weitere Ausführung einer Vorrichtung 96 zur Herstellung von Granulaten aus polymeren Werkstoffen, die anstelle der Vorrichtung 77 zum Einsatz kommen kann. Komponenten und Funktionen, die denjenigen entsprechen, die vorstehend unter Bezugnahme auf die Fig. 1 bis 7 und insbesondere unter Bezugnahme auf die Fig. 7 bereits erläutert wurden, tragen die gleichen Bezugsziffern und werden nicht nochmals im Einzelnen diskutiert.

Bei der Ausführung nach Fig. 8 ist in der Abgangs-Rohrleitung 51 ein Vor-Wärmetauscher 97 angeordnet, bei dem es sich ebenfalls um einen Rohrbündelwärmetauscher handeln kann. Der Vor-Wärmetauscher 97 nimmt Wärme vom Granulierwasser, das über die Abgangs-Rohrleitung 51 durch den Vor-Wärmetauscher 97 hindurchgeführt wird, auf und gibt diese an das Salzlösungs-Wärmeträgermedium ab, welches dem Vor-Wärmetauscher 97 über eine Zuführleitung 98 zugeführt wird und den Vor-Wärmetauscher 97 über eine Abführleitung 99 verlässt. Die Zuführleitung 98 verbindet den Rekuperator 80 mit dem Vor-Wärmetauscher 97. Die Abführleitung 99 verbindet den Vor-Wärmetauscher 97 mit dem Granulat-Wärmetauscher 11 und stellt gleichzeitig dessen Wärmetauschermedium-Einlass dar.

Ansonsten entspricht die Vorrichtung 96 der Vorrichtung 77.

In der Fig. 8 ist schematisch dargestellt, dass die Abgangs-Rohrleitung 51 nicht direkt mit dem Kühlwassertank 42 verbunden sein muss, sondern auch in die Kühlwasserleitung 40 einmünden kann.

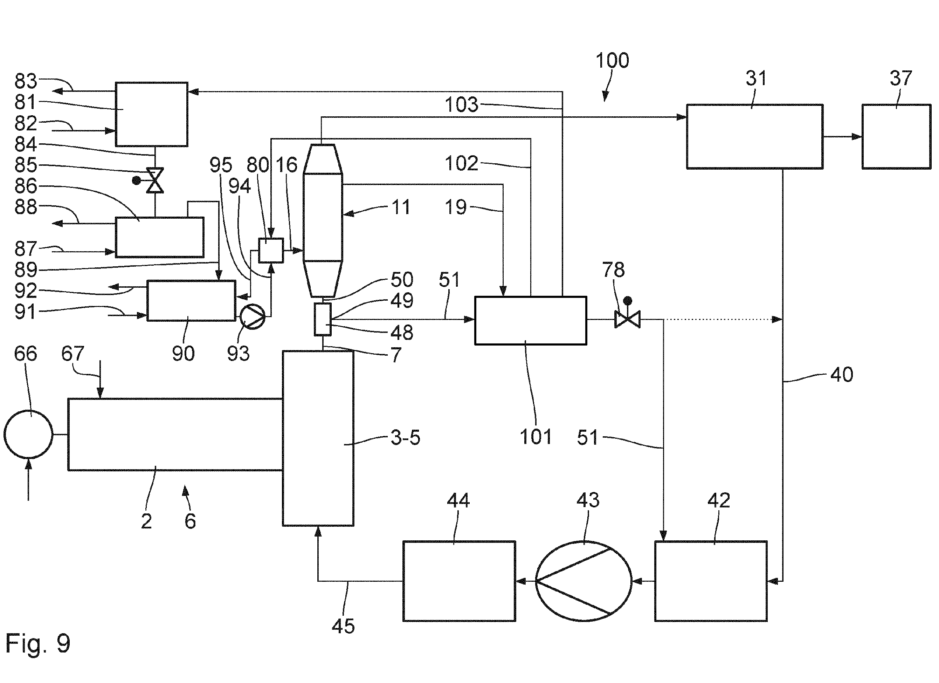

Fig. 9 zeigt eine weitere Ausführung einer Vorrichtung 100 zur Herstellung von Granulaten aus polymeren Werkstoffen, die anstelle der Vorrichtung 77 zum Einsatz kommen kann. Komponenten und Funktionen, die denjenigen entsprechen, die vorstehend unter Bezugnahme auf die Fig. 1 bis 8 und insbesondere unter Bezugnahme auf die Fig. 7 und 8 bereits erläutert wurden, tragen die gleichen Bezugsziffern und werden nicht nochmals im Einzelnen diskutiert.

Bei der Vorrichtung 11 haben hinsichtlich der Reihenfolge eines Erwärmens des Salzlösungs-Wärmeträgermediums der Vor-Wärmetauscher und der Granulat-Wärmetauscher die Rollen getauscht. Der Auslass 19 des Granulat-Wärmetauschers 11 steht mit einem Austreiber-Wärmetauscher 101 in Fluidverbindung, der bei der Vorrichtung 100 am Ort des Vor-Wärmetauschers 97 der Vorrichtung 96 nach Fig. 8 angeordnet ist, also in der Abgangs-Rohrleitung 51 angeordnet ist. Die im Austreiber-Wärmetauscher 101 erwärmte Salzlösung wird in den Rekuperator 80 über eine Rückführleitung 102 rückgeführt. Ein Wasserdampf-Auslass 103 verbindet den Austreiber-Wärmetauscher 101 mit dem Kondensator 81.

Ansonsten entspricht die Vorrichtung 100 nach Fig. 9 der Vorrichtung 96 nach Fig. 8.

## Patentansprüche

1. Vorrichtung (1; 46; 47; 60; 65; 77; 96; 100) zur Herstellung von Granulaten aus polymeren Werkstoffen
- mit einer wassergekühlten Granuliereinrichtung (6) zur Erzeugung eines Kunststoff-Granulats,
- mit einer der Granuliereinrichtung (6) nachgeordneten Abführleitung (7) zum Abführen eines Ausgangs-Gemischstroms, enthaltend das Kunststoff-Granulat und Kühlwasser,
- mit einem der Abführleitung (7) nachgeordneten Granulat-Wärmetauscher (11) zum Temperieren eines Temperier-Gemischstroms, enthaltend das Kunststoff-Granulat und zumindest einen Teil des Kühlwassers,
- wobei der Granulat-Wärmetauscher (11) einen Einlass (16; 99) für ein Übertragungs-Wärmetauschermedium und einen Auslass (19) für ein Übertragungs-Wärmetauschermedium aufweist,
- mit einer dem Granulat-Wärmetauscher (11) nachgeordneten Trocknungseinrichtung (31) zum Trocknen des Kunststoff-Granulats,
- wobei der Granulat-Wärmetauscher (11) eine Mehrzahl von parallel, also nicht in Reihe, verlaufenden Fluidpassagen (14) für den Temperier-Gemischstrom aufweist.

2. Vorrichtung nach Anspruch 1, **gekennzeichnet durch** eine Bypass-Leitung (10), die den Granulat-Wärmetauscher (11) zwischen der Granuliereinrichtung (6) und der Trocknungseinrichtung (31) überbrückt.

3. Vorrichtung nach Anspruch 1 oder 2, **dadurch gekennzeichnet, dass** der Temperier-Gemischstrom entgegen einer Schwerkraftwirkung durch die Fluidpassagen (14) gefördert wird.

4. Vorrichtung nach Anspruch 1 oder 2, **dadurch gekennzeichnet, dass** der Temperier-Gemischstrom unter Schwerkrafteinfluss durch die Fluidpassagen (14) gefördert wird.

5. Vorrichtung nach einem der Ansprüche 1 bis 4, **gekennzeichnet durch** eine Konzentriereinrichtung (48; 54), deren Eingang von der Abführleitung (7) gespeist wird und die
- einen ersten Ausgang (49) für einen Kühlwasserstrom und
- einen zweiten Ausgang (50) für den Temperier-Gemischstrom
aufweist,
wobei
- der erste Ausgang (49) der Konzentriereinrichtung (48; 54) mit einer Rückführleitung (51) für das Kühlwasser hin zur Granuliereinrichtung (6) in Fluidverbindung steht,
- der zweite Ausgang (50) der Konzentriereinrichtung (48; 54) mit dem Granulat-Wärmetauscher (11) in Fluidverbindung steht.

6. Vorrichtung nach Anspruch 5, **dadurch gekennzeichnet, dass** die Konzentriereinrichtung (54) am Eingang des Granulat-Wärmetauschers (11) in diesen integriert ist.

7. Vorrichtung nach Anspruch 5 oder 6, **dadurch gekennzeichnet, dass** in der Rückführleitung (51) zwischen der Konzentriereinrichtung (48, 54) und der Granuliereinrichtung (6) ein Kühlwasser-Wärmetauscher (53; 97; 101) angeordnet ist.

8. Vorrichtung nach einem der Ansprüche 1 bis 7, **dadurch gekennzeichnet, dass**
- der Einlass (16) des Granulat-Wärmetauschers (11) für das Übertragungs-Wärmetauschermedium mit einer der Trocknungseinrichtung (31) nachgeordneten Abscheiderleitung (61) für abgeschiedenes Kühlwasser in Fluidverbindung steht,
- der Auslass (19) des Granulat-Wärmetauschers (11) für das Übertragungs-Wärmtauschermedium mit einer Rückführleitung (64) für das Kühlwasser hin zur Granuliereinrichtung (6) in Fluidverbindung steht.

9. Vorrichtung (1; 46, 47; 65) zur Herstellung von Granulaten aus polymeren Werkstoffen
- mit einer wassergekühlten Granuliereinrichtung (6) zur Erzeugung eines Kunststoffgranulats,
- mit einer der Granuliereinrichtung (6) nachgeordneten Abführleitung (7) zum Abführen eines Ausgangs-Gemischstroms, enthaltend das Kunststoff-Granulat und Kühlwasser,
- mit einer der Abführleitung (7) nachgeordneten Energie-Rückgewinnungseinrichtung (18) zur Rückgewinnung von Energie aus einem Rückgewinnungs-Kühlwasserstrom, enthaltend zumindest einen Teil des Kühlwassers des Ausgangs-Gemischstroms,
- wobei die Energie-Rückgewinnungseinrichtung (18) mindestens einen ORC-Kreislauf (17) für ein ORC-Kreislaufmedium umfasst mit:
- - einer ORC-Turbine (22),
- - einem ORC-Verdampfer (11, 21; 11, 68) im ORC-Kreislauf (17) vor der ORC-Turbine (22),
- - einem ORC-Kondensator (24) im ORC-Kreislauf (17) nach der ORC-Turbine (22).

10. Vorrichtung nach Anspruch 9, **dadurch gekennzeichnet, dass** der ORC-Verdampfer (11, 21; 11, 68) eine ORC-Verdampfereinheit (21; 68) im ORC-Kreislauf (17) vor der ORC-Turbine (22) und eine ORC-Vorwärmereinheit (11) im ORC-Kreislauf (17) vor der ORC-Verdampfereinheit (21; 68) aufweist, wobei die ORC-Verdampfereinheit (68) und/oder die ORC-Vorwärmereinheit (11) als Wärmetauscher mit dem Rückgewinnungs-Kühlwasserstrom ausgebildet sind.

11. Vorrichtung nach Anspruch 9 oder 10, **gekennzeichnet durch**
- einen ORC-Kühler (74) im ORC-Kreislauf (17) zwischen der ORC-Turbine (22) und dem ORC-Kondensator (24) zur Abgabe von Wärme vom ORC-Kreislaufmedium auf ein Übertragungs-Wärmetauschermedium,
- einen ORC-Vorvorwärmer (75) im ORC-Kreislauf (17) zwischen dem ORC-Kondensator (24) und dem ORC-Verdampfer (11, 68) zur Abgabe von Wärme vom Übertragungs-Wärmetauschermedium auf das ORC-Kreislaufmedium.

12. Vorrichtung nach einem der Ansprüche 9 bis 11, **gekennzeichnet durch** eine Konzentriereinrichtung (48), deren Eingang von der Abführleitung (7) gespeist wird und die
- einen ersten Ausgang (49) für einen Kühlwasserstrom und
- einen zweiten Ausgang (50) für einen Gemischstrom, enthaltend Kunststoff-Granulat und Kühlwasser mit einem höheren Granulatanteil als der Ausgangs-Gemischstrom, aufweist,
- wobei der erste Ausgang (49) der Konzentriereinrichtung (48) mit dem ORC-Verdampfer (68) in Fluidverbindung steht.

13. Vorrichtung nach einem der Ansprüche 10 bis 12, **dadurch gekennzeichnet, dass** die ORC-Vorwärmereinheit (11) in Fluidverbindung mit dem zweiten Ausgang (50) der Konzentriereinrichtung (48) steht.

14. Vorrichtung nach einem der Ansprüche 9 bis 13, **dadurch gekennzeichnet, dass** das ORC-Kreislaufmedium eine Verdampfungsenthalpie im Bereich zwischen 0 und 2600kJ/kg und/oder eine Wärmekapazität im Bereich zwischen 0 und 6kJ/kgK aufweist.

15. Vorrichtung nach einem der Ansprüche 9 bis 14, **gekennzeichnet durch** eine Bypass-Leitung (10), die die Energie-Rückgewinnungseinrichtung (18) zwischen der Granuliereinrichtung (6) und einer Trocknungseinrichtung (31) überbrückt.
